Europäisches Patentamt

European Patent Office

Office européen des brevets

(19)

(11) **EP 1 117 247 A1**

(12) **EUROPEAN PATENT APPLICATION**

(43) Date of publication:
**18.07.2001 Bulletin 2001/29**

(51) Int Cl.[7]: **H04N 1/00**

(21) Application number: **00109417.6**

(22) Date of filing: **03.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **11.01.2000 US 480405**

(71) Applicant: **EASTMAN KODAK COMPANY Rochester, New York 14650 (US)**

(72) Inventor: **Wen, Xin Palo Alto California 94303 (US)**

(74) Representative: **Lewandowsky, Klaus, Dipl.-Ing. Kodak Aktiengesellschaft, Patentabteilung 70323 Stuttgart (DE)**

(54) **Changing the properties of digital images having embedded image-access information**

(57)     A method for producing a visual image having selected properties and for providing payment includes storing a digital image having embedded image-access information in an electronic memory, the image-access information including the receiver of payment and selectable image properties for which different payments are to be made, accessing the electronic memory and extracting the image-access information from the digital image, selecting at least one property from the selectable image properties for producing the visual image, making payment to the receiver of payment based on at least in part one selected image property. The method further includes producing the visual image with the selected property in response to the digital image by an imaging device.

FIG. 1

**Description**

The present invention relates to providing payment for producing visual images from digital images.

Images can be viewed by many different types of imaging devices: they can be displayed on a monitor such as a liquid crystal display (LCD), a cathode ray tub monitor (CRT), or an organic light emitting diode display (OLED). They can be printed on a reflective or transparent receiver by a printer. They can also be projected onto a screen using a projector to present a static image or motion images. The imaging devices are usually installed in different sites. In addition, many of the digital images are protected by copyright. Adequate payment methods need to be set up for the users of the digital image to make payment to the copyright owners of the digital images.

As modern communication and computing technologies provide convenience for viewing the images, means for making payment for image use is still underdeveloped. A problem with prior payment schemes is that it is that there is no effective correspondence between the images, the image properties and the account of the receiver of payment. In other words, if a receiver of payment wishes to permit others to access an image but desires to receive payment for the image, it is very difficult for the user to make payment to the receiver of payment.

An object of the present invention is to provide an effective correspondence between the images, the image properties and the account of the receiver of payment.

Another object of the present invention is to provide payment methods in accordance to the properties of the visual images.

These objects are achieved by a method for producing a visual image having selected properties and for providing payment therefor, comprising the steps of:

a) storing a digital image having embedded image-access information in an electronic memory, the image-access information including the receiver of payment and selectable image properties for which different payments are to be made;
b) accessing the electronic memory and extracting the image-access information from the digital image;
c) selecting at least one property from the selectable image properties for producing the visual image;
d) making payment to the receiver of payment based on at least in part one selected image property; and
e) producing the visual image with the selected property in response to the digital image by an imaging device.

A feature of the present invention is that selectable image properties are embedded in the digital images and the payment for producing the image is dependent on the image property.

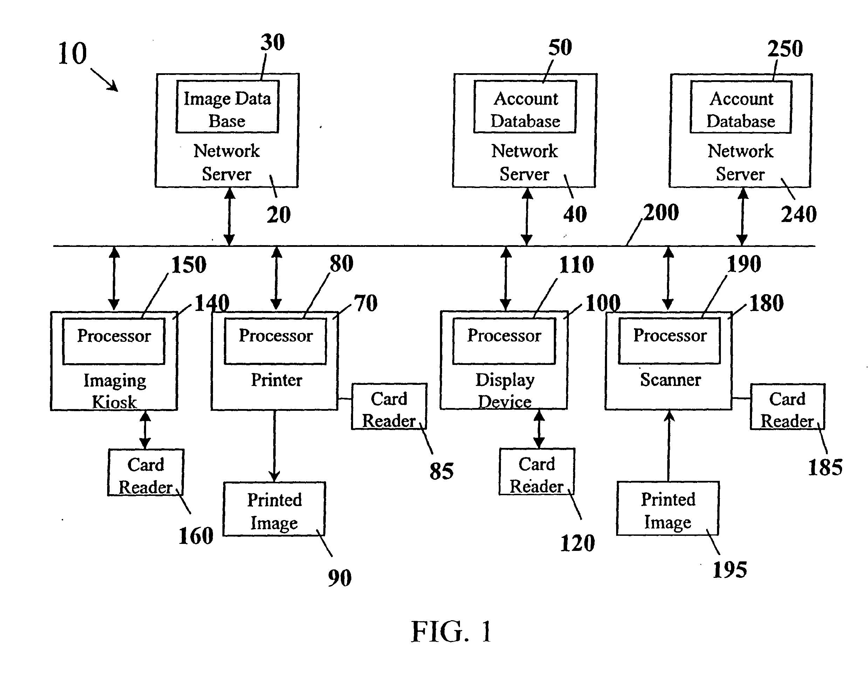

FIG. 1 illustrates the system for providing the service of producing visual images using digital images in accordance with the present invention.

This invention relates to a method for providing payment for producing a visual image on an imaging device. In this disclosure, the term imaging device can include any devices that can form a visual image, for example, a display device, a printer, or a projector. A display device can be, for example. liquid crystal device (LCD), a cathode ray tub monitor (CRT), or an organic light emitting diode display (OLED). The monitor can be self-standing or hand held. A projector projects a static image or motion images on a screen, which are exemplified by a LCD light valve or digital mirror technologies. A printer can be an ink jet printer, a thermal resistive printer, a laser (electrophotographic) printer, or a digital silver halide printer.

FIG. 1 illustrates the imaging and payment system 10 for providing the service of producing visual images using digital images in accordance with the present invention. The imaging and payment system 10 includes a first network server 20 having an image data base 30, a second network server 40 having an account database 50, a printer 70 having a processor 80 for producing printed image 90, a display device 100 having a processor 110, and an imaging kiosk 140 having a processor 150. The imaging and payment system 10 can also include a scanner 180 having a processor 190. The scanner 180 scans a printed image 195.

The imaging devices can be located adjacent to each other or installed at different locations such as shopping malls, airports or train stations, movie cinema, entertainment parks, or supermarkets. The second network server 40 is installed at a service provider that provides the digital images that are used at various imaging devices. The account database 50 stores and manages the account information of the service provider for collecting the payment for the usage of the imaging devices.

The imaging devices described above produce visual images in response to the request of the users. The visual image can be produced by displaying on a monitor or by printing on a reflective or transmissive receiver such as paper or synthetic material. The customer can select at least one property for producing such visual images. For the printer 70, for example, the selectable image properties includes image size, the number of the visual images, the properties of the imaging device including the printer type, the printing resolution, the properties of the colorants, the receiver type, and the print finish. The selectable properties can also include imaging processing operations for enhancing the features or the quality of the visual images. The image processing operations include adjusting tone scale, adjusting color balance, adjusting color saturation, reducing red-eye, sharpening of softening the image, reducing blur, cropping, zooming, inserting the digital image into an image template, adding text or annotation into the image, and retouching the image.

A communication channel 200 electronically connects the network servers 20 and 40, the printer 70, the display device 100, the imaging kiosk 140, and the scanner 180 for providing communication between these devices. The communication channel 200 can exist in different physical and software forms. For example, the communication channel 200 can include an Internet or a local network. They can be built with an optical-fiber cable, a co-axial cable, telephone line, satellite transmission system, and wireless radio-wave transmission. The communication over the communication channel 200 can use different protocols such as the World Wide Web, and File Transfer Protocol (FTP).

The imaging and payment system 10 also includes a third network server 240 associated with a bank which holds the account of a user of the imaging devices. The third network server 240 includes an account database that stores and manages the account information for the user of the imaging devices such as the printer 70, the display device 100, the imaging kiosk 140, and the scanner 180.

The image database 30 stores a plurality of digital images having embedded image-access information. The image-access information includes information about the receiver of payment for the imaging services using these digital images. An example of the receiver of payment is the service provider for the imaging services. The image-access information can also include the web or e-mail address of the receiver of the payment such as the service provider. In the present inventions, an image service can include capturing, processing, printing, copying, scanning, and reproducing of images in an electronic device or to or from a receiver.

For providing imaging services to the user at an imaging device such as the printer 70, the display device 100, imaging kiosk 140 or a scanner 180, the imaging device receives digital images from the image database 30. Image-access information is embedded in the digital image. The embedded image-access information is preferably invisible when a visual image is produced from the digital image. After the digital images are received, the embedded image-access information is extracted from the digital images, as described below, in the processors 70, 100, 140, 180 that are located within or near each of the imaging devices.

Each of the printer 80, the display device 100, the imaging kiosk 140, and the scanner 180 is respectively connected to a card reader 85, 120, 160, 185, which are in turn connected with the information channel 200 The card readers 85, 120, 160, 185 can read account information by scanning a credit card or a bankcard corresponding to the third network server 240 or from manual input of an operator. The account information includes an identifier such as a bank account number that specifies the user's bank account. The payment of the imaging service is to be debited toward the user's account. The payment is accomplished by transferring funds from the identifier specified account to the receiver of payment. The bank card readers 85,120, 160, or 185 can communicate with the second network server 40 and the third network server 240 through the communication channel 200. The bank card readers 85,120, 160, or 185 manage and record payment transactions for the imaging services using the receiver-account information extracted from the digital image and the user-account information read from a bankcard.

In accordance with the present invention, the payment billed to the user's account is dependent on the type of imaging service requested by the user. The image assess information embedded in the digital image sent from the image database 30 to the imaging devices can include selectable image properties for the imaging service. Different imaging properties result in different amounts of payment from the user's account.

The selectable image properties can include a plurality of imaging programs that provide features to the visual image to be produced on a receiver or a monitor. For example, the imaging programs can include adjusting tone scale, adjusting color balance, adjusting color saturation, reducing red-eye, sharpening of softening the image, reducing blur, cropping, zooming, inserting the digital image into an image template, adding text into the image, and retouching the image. The selectable image properties can also include image size and the number of the visual images to be produced. The selectable image properties can include can also include properties of the imaging device such as the printer or the scanner type, the printing resolution, the properties of the colorants, the receiver type, and the type print finish. These device properties often determine the quality of the visual images as well as the cost to the service provider. For example, an ink image produced on a photo quality receiver by a 6-ink ink jet printer will cost more payment than an ink jet image printed on a plain paper using a 4-ink jet printer.

Before the visual image is finalized, the user can preview the improved (that is processed or modified) image on a monitor. The user can order the final visual image such as the number or the size of the visual images according to her satisfaction with the preview image. After the order is made for the imaging service, proper amount of charge is debited from the user's account to the receiver of the payment based on the selected image property. The visual image having the image property is subsequently produced on the imaging device.

The embedding and extraction of image-access information in the digital image is now described. A digital image $I(x,y)$ is stored in image database 30. The image-access information is embedded into the digital image $I(x,y)$ by modifying the pixel values in $I(x,y)$ to produce a modified digital image I'(x,y) having the embedded image-access information. The image-access information can be encrypted before embedding.

The embedding of the image-access information starts with producing a message image M(x,y). The message image M(x,y) can include alphanumeric or graphic information associated with the image-access information. A carrier image C(x,y) is also generated with a uniform or flat Fourier amplitude spectrum and a phase spectrum generated using a random number generator for each phase component. The random phase is required to distribute the message image to make the message invisible and unreadable to human eyes.

The message image M(x,y) and the carrier image C(x,y) are then convolved to form a distributed signal S(x,y).

$$S(x,y)=M(x,y)*C(x,y) \qquad (1)$$

In eqn. (1), the symbol "$*$" denotes the mathematical operation of convolution, for example, a circular convolution.

The distributed signal S(x,y) is next added to the digital image I(x,y) to produce a modified digital image I'(x,y) carrying the embedded information:

$$I'(x,y) = I(x,y) + \alpha S(x,y) \qquad (2)$$

The distributed signal S(x,y) is scaled by a scale factor a to maximize the signal of the embedded image-access information while ensuring the invisibility of the distributed message in the modified digital image I'(x,y). That is, the value of a can also be chosen for optimizing image quality.

The reliability of extracting the embedded information can be improved by superimposing a plurality of blocks of distributed signals S(x,y) to each color plane of the processed digital image I(x,y). Each of the blocks can be, for example, 64 x 64, 128 x 128, or 256 x 256 pixels in size. For a 300 dpi or 600 dpi printer, these blocks represent a small area (smaller than 1 square inch) on the printed identification document. The redundancy in the distributed signals S(x,y) increases the signal-to-noise ratio in the extraction of embedded information from modified digital image I'(x,y). In the present invention, the term extracting is used to refer the action of retrieving information from an image or visual textual information.

The modified digital image I'(x,y) is transferred via the communication channel 200 to an imaging device such as the printer 70. The image-access information is extracted from the modified digital image I'(x,y) in the processors 70, 100, 150, 180. The extraction of the embedded image-access information from the modified image I'(x,y) involves cross-correlating I'(x,y) with the carrier image C(x,y) to obtain the message image M(x,y). If the image-access information is encrypted, the image-access information is subsequently decrypted from the extracted information by the processors 70,100,150,180 at the imaging devices.

The data embedding technique disclosed in US-A-5,636,292 is also compatible with the present invention. The disclosures in these references are hereby incorporated in regard to embedding and extracting image-access information in the digital images stored in the image data base 30.

A computer program product may include one or more storage medium, for example; magnetic storage media such as magnetic disk (such as a floppy disk) or magnetic tape; optical storage media such as optical disk, optical tape, or machine readable bar code; solid-state electronic storage devices such as random access memory (RAM), or read-only memory (ROM); or any other physical device or media employed to store a computer program having instructions for practicing a method according to the present invention.

Other features of the invention are included below.

The method further including the step of providing a reader for reading a credit card from a user of the imaging device, such credit card including having an identifier specifying an account where the payment is to be debited.

The method wherein the imaging device is a printer which produces the visual image on a receiver.

The method wherein the imaging device is a display device or a projector which display the visual image.

The method wherein the imaging device is a kiosk which processes, displays and prints the digital image.

The method further including previewing the digital image on a monitor before selecting image properties.

PARTS LIST

| | |
|---|---|
| 10 | imaging and payment system |
| 20 | first network server |
| 30 | image database |
| 40 | second network server |
| 50 | account database |
| 70 | printer |
| 80 | processor |
| 85 | card reader |
| 90 | printed |
| 100 | display device |
| 110 | processor |
| 120 | card reader |
| 140 | kiosk |
| 150 | processor |

160   card reader
180   scanner
185   card reader
190   processor
195   printed image
200   communication channel
240   third network server
250   account database

**Claims**

1. A method for producing a visual image having selected properties and for providing payment therefor, comprising the steps of:

   a) storing a digital image having embedded image-access information in an electronic memory, the image-access information including the receiver of payment and selectable image properties for which different payments are to be made;
   b) accessing the electronic memory and extracting the image-access information from the digital image;
   c) selecting at least one property from the selectable image properties for producing the visual image;
   d) making payment to the receiver of payment based on at least in part one selected image property; and
   e) producing the visual image with the selected property in response to the digital image by an imaging device.

2. The method of claim 1 further including providing a monitor and viewing an image including the selected image property before making payment.

3. The method of claim 1 wherein the selectable image properties include a plurality of imaging programs which provide features to the digital image.

4. The method of claim 1 wherein the plurality of imaging programs including adjusting tone scale, adjusting color balance, adjusting color saturation, reducing red-eye, sharpening of softening the image, reducing blur, cropping, zooming, inserting the digital image into an image template, adding text into the image, and retouching the image.

5. The method of claim 1 wherein the selectable image properties includes image size, the number of the visual images, the properties of the imaging device including the printer type, the printing resolution, the properties of the colorants, the receiver type, and the print finish.

6. The method of claim 1 wherein the visual image includes the embedded image-access information which is invisible.

7. The method of claim 1 further including displaying the visual image on a monitor and displaying embedded image-access information on a monitor.

8. The method of claim 1 wherein the image-access information includes an identifier specifying an account of the receiver of payment for electronically transferring payment to such account.

9. The method of claim 1 wherein the image-access information includes an internet or web address of the receiver of payment.

10. A computer program product having instructions stored therein for causing a computer to perform the method of claim 1.

FIG. 1

## EP 1 117 247 A1

**European Patent Office**

## EUROPEAN SEARCH REPORT

**Application Number**

EP 00 10 9417

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 823 820 A (CANON KK) 11 February 1998 (1998-02-11) * abstract * * column 1, line 44 - column 3, line 16 * --- | 1-10 | H04N1/00 |
| X A | EP 0 854 458 A (SONY CORP) 22 July 1998 (1998-07-22) * abstract * * column 2, line 14 - column 3, line 1 * * column 3, line 28 - line 53 * * column 6, line 1 - line 17 * * column 6, line 48 - line 56 * --- | 1 2-10 | |
| X A | WO 96 32813 A (SILVERBROOK KIA ;EASTMAN KODAK CO (US)) 17 October 1996 (1996-10-17) * abstract * * page 57, line 18 - page 58, line 11 * --- | 1 2-10 | |
| X | EP 0 788 080 A (CANON KK) 6 August 1997 (1997-08-06) * abstract * --- | 1 | TECHNICAL FIELDS SEARCHED (Int.Cl.7) H04N G06F |
| A | EP 0 751 685 A (CANON KK) 2 January 1997 (1997-01-02) * abstract * --- | 1-10 | |
| A | US 5 621 492 A (BEVERIDGE IAIN M ET AL) 15 April 1997 (1997-04-15) * abstract * * column 2, line 8 - line 43 * * column 3, line 19 - line 60 * ----- | 1-10 | |

The present search report has been drawn up for all claims

| Place of search | Date of completion of the search | Examiner |
|---|---|---|
| THE HAGUE | 27 December 2000 | Hubeau, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 10 9417

This annex lists the patent family members relating to the patent documents cited in the above-mentioned European search report.
The members are as contained in the European Patent Office EDP file on
The European Patent Office is in no way liable for these particulars which are merely given for the purpose of information.

27-12-2000

| Patent document cited in search report | | Publication date | Patent family member(s) | | Publication date |
|---|---|---|---|---|---|
| EP 0823820 | A | 11-02-1998 | JP | 10049584 A | 20-02-1998 |
| | | | AU | 701005 B | 21-01-1999 |
| | | | CA | 2212027 A | 05-02-1998 |
| EP 0854458 | A | 22-07-1998 | JP | 10180994 A | 07-07-1998 |
| | | | CN | 1186025 A | 01-07-1998 |
| | | | SG | 770053 A | 25-01-2000 |
| | | | US | 6101330 A | 08-08-2000 |
| WO 9632813 | A | 17-10-1996 | EP | 0765570 A | 02-04-1997 |
| | | | US | 5909227 A | 01-06-1999 |
| EP 0788080 | A | 06-08-1997 | JP | 9212554 A | 15-08-1997 |
| | | | JP | 9212252 A | 15-08-1997 |
| EP 0751685 | A | 02-01-1997 | JP | 9018852 A | 17-01-1997 |
| | | | JP | 9046678 A | 14-02-1997 |
| | | | JP | 9046680 A | 14-02-1997 |
| | | | AU | 5629296 A | 09-01-1997 |
| | | | CA | 2179973 A | 31-12-1996 |
| | | | CN | 1146110 A | 26-03-1997 |
| | | | SG | 48461 A | 17-04-1998 |
| | | | SG | 54610 A | 16-11-1998 |
| | | | SG | 53134 A | 28-09-1998 |
| US 5621492 | A | 15-04-1997 | CA | 2211394 A | 01-08-1996 |
| | | | EP | 0806107 A | 12-11-1997 |
| | | | JP | 10503343 T | 24-03-1998 |
| | | | WO | 9623386 A | 01-08-1996 |

For more details about this annex : see Official Journal of the European Patent Office, No. 12/82